# EUROPÄISCHE PATENTSCHRIFT

(11) **EP 0 967 419 B1**
(45) Veröffentlichungstag und Bekanntmachung des Hinweises auf die Patenterteilung: **22.11.2000**
(21) Anmeldenummer: 98111682.5
(22) Anmeldetag: 25.06.1998
(51) Int. Cl.: F16H 63/32

(54) **Schaltgabel für Wechselgetriebe**
Shift fork for change speed transmission
Fourchette pour une boîte de vitesses

(43) Veröffentlichungstag der Anmeldung: 29.12.1999
(73) Patentinhaber: Ford Global Technologies, Inc., A subsidiary of Ford Motor Company, Dearborn, Michigan 48126 (US)
(72) Erfinder: Deidewig, Hartmut, 51503 Roesrath (DE); Chazotte, Jean-Pierre, 50678 Koeln (DE); Doelling, Matthias, 51429 Bergisch Gladbach (DE)
(74) Vertreter: Messulam, Alec Moses

(56) Entgegenhaltungen:
- DE-A- 4 316 140
- DE-U- 8 902 040
- GB-A- 957 889
- GB-A- 1 183 140
- US-A- 1 712 938

## Beschreibung

Die Erfindung bezieht sich auf eine Schaltgabel für Wechselgetriebe, der im Oberbegriff des Patentanspruches 1 erläuterten Art.

Aus der GB PS 1 183 140 ist bereits seit ca. 30 Jahren eine Schaltgabel für Wechselgetriebe bekannt, die aus einem Schaltgabelgrundkörper aus einem Blechpreßteil besteht, der einen sogenannten Schaltarm und die eigentliche Schaltgabel bildet und an dem Kunststoffteile aus gleifförderndem Material verankert sind.

Die bekannte Schaltgabel ist hierbei axial fest auf einer axial verschiebbaren Schaltstange angeordnet und der sogenannte Schaltarm ist ein Teil des Schaltgabelgrundkörpers und die Schaltnut wird durch eine Ausnehmung im Schaltgabelgrundkörper gebildet, die mit einem Schaltfinger der Schaltvorrichtung zusammenwirkt.

Die bekannte Schaltgabel ist dafür ausgelegt, mit einer Schaltstange zusammen zu wirken, an der nur diese eine Schaltgabel angeordnet ist und die im Getriebegehäuse axial verschiebbar gelagert ist.

Die Aufgabe der vorliegenden Erfindung ist es, eine Schaltgabel für Wechselgetriebe der im Oberbegriff des Patentanspruches 1 erläuterten Art derart zu verbessern, daß ein Zusammenwirken von mehreren, auf nur einer Schaltstange angeordneten Schaltgabeln ermöglicht wird, wobei für ein räumliches einander Übergreifen der Schaltstangen bei gleichzeitig gewichtssparender Auslegung gesorgt wird.

Gemäß der Erfindung wird diese Aufgabe gelöst, indem eine Schaltgabel für Wechselgetriebe der im Oberbegriff des Patentanspruches 1 erläuterten Art, die im Kennzeichenteil des Patentanspruches 1 aufgezeigten Merkmale aufweist.

Dadurch, daß der Schaltarm als ein aus dickerem Blechmaterial gefertigtes Feinstanzteil, der Schaltgabelgrundkörper und die Schaltgabel als ein aus dünnerem Blechmaterial gefertigtes Tiefziehteil ausgebildet und das Feinstanzteil mit dem Tiefziehteil über geeignete Schweißverfahren wie z.B. Punkt-, Widerstands- oder Laserschweißen miteinander verbunden sind und die Schaltgabelführungen als an dem Tiefziehteil verankerte Führungshülsen aus gleifförderndem Material gebildet sind, können mehrere Schaltgabeln infolge ihrer räumlich steifen Konstruktion einander übergreifend auf nur einer Schaltstange angeordnet werden.

Die Erfindung wird anhand eines in den Zeichnungen gezeigten Ausführungsbeispieles näher erläutert. Es zeigt:
- Fig. 1: eine Perspektivdarstellung einer Schaltstange mit darauf angeordneten drei Schaltgabeln;
- Fig. 2: eine Draufsicht auf die Getriebewellen und die Schaltvorrichtung mit den Schaltgabeln in Fig, 1, wie sie für ein Transaxelgetriebe mit fünf Gängen aufgelegt ist;
- Fig. 3, 4, 5 und 6: zwei Ansichten der Schaltgabel für den ersten und zweiten Gang mit entsprechenden Schnitten;
- Fig. 7, 8, 9 und 10: zwei Ansichten der Schaltgabel für den dritten und vierten Gang mit entsprechenden Schnitten und
- Fig. 11, 12, 13 und 14: entsprechende Ansichten für die Schaltgabel des fünften Ganges.

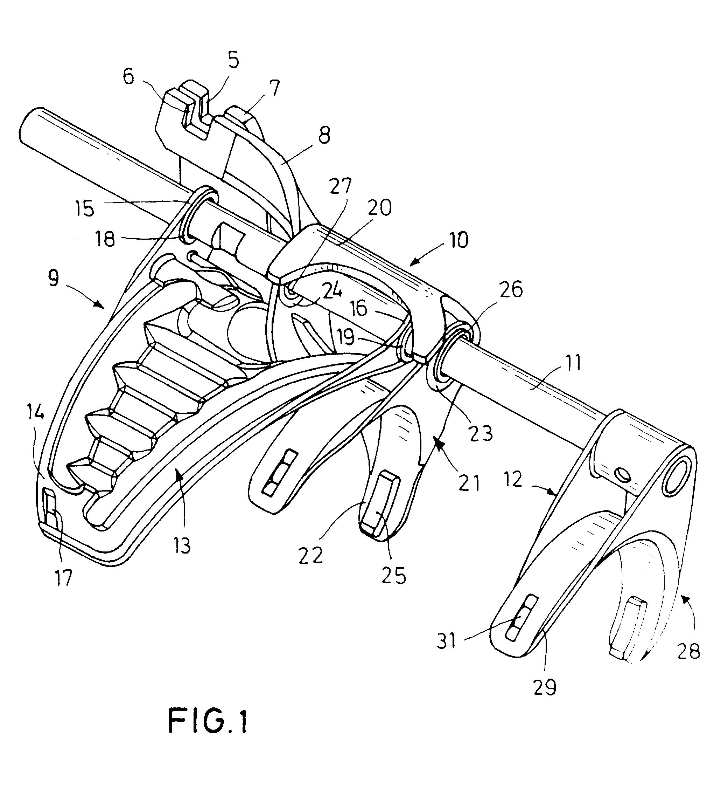

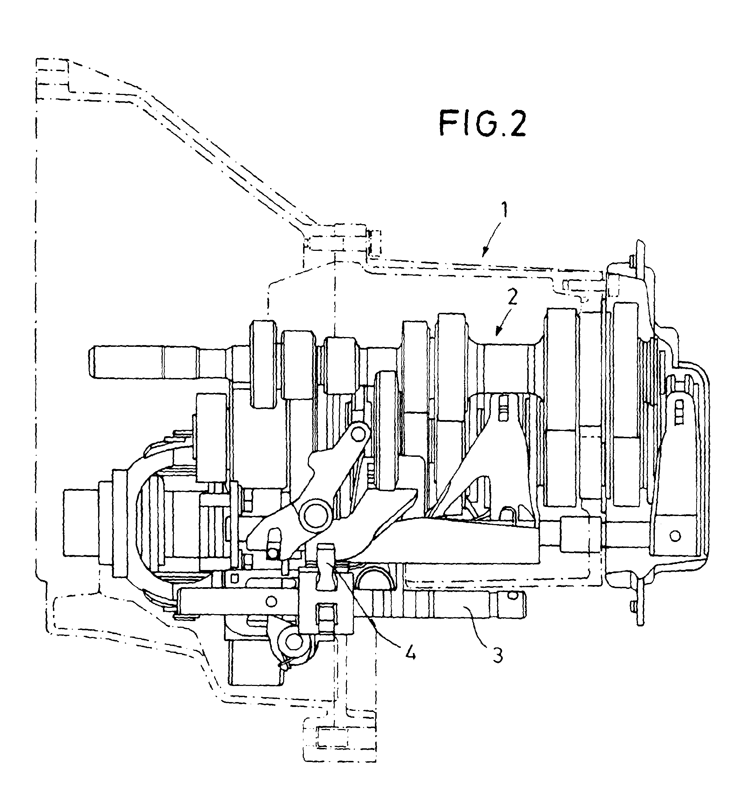

Die wesentlichen Einzelheiten der erfindungsgemäßen Schaltgabel für Wechselgetriebe werden hauptsächlich in Zusammenhang mit Fig. 1 und 2 erläutert.

In einem in Punkt-Strich-Linien angedeuteten Getriebegehäuse 1 sind Zahnradsätze 2 angeordnet, die in üblicher Weise aus jeweils einem festen Zahnrad und einem losen Zahnrad bestehen, wobei das lose Zahnrad mittels einer Synchronisiereinrichtung wahlweise mit der entsprechenden Getriebewelle drehfest verbunden werden kann.

Zum Ausführen der entsprechenden Schaltbewegungen ist im Getriebegehäuse 1 eine Schaltwelle 3 axial verschiebbar und radial schwenkbar angeordnet und weist einen Schaltfinger 4 auf, der in Eingriff mit entsprechenden Schaltnuten 5 und 6 an sogenannten Schaltarmen 7 und 8 gebracht werden kann und z.B. eine Schaltgabel 9 für den ersten und zweiten Gang oder eine Schaltgabel 10 für den dritten und vierten Gang zu betätigen.

Die beiden Schaltgabeln 9 und 10 sind hierbei auf einer axial verschiebbaren Schaltstange 11 angeordnet, die an ihrem einen Ende mit einer Schaltgabel 12 für den fünften Gang verbunden ist.

Am anderen Ende der Schaltstange 11 greift eine Schaltvorrichtung an, die für das Einrücken des Rückwärtsganges bzw. des fünften Ganges ausgelegt ist und hier nicht näher erläutert wird.

Der erfindungsgemäße Aufbau einer Schaltgabel gemäß der Erfindung wird nunmehr in Zusammenhang mit Fig. 1 und den jeweiligen Fig. mit den Darstellungen für die einzelnen Schaltgabeln 9, 10 und 12 näher erläutert.

So besteht die Schaltgabel 9 für den ersten und zweiten Gang aus dem aus dickerem Blechmaterial als Feinstanzteil gefertigten Schaltarm 7 und einem Schaltgabelgrundkörper 13, der als ein aus dünnerem Blechmaterial gefertigtes Tiefziehteil gebildet ist und die eigentliche Schaltgabel 14 und Schaltgabelführungsaugen 15 und 16 bildet.

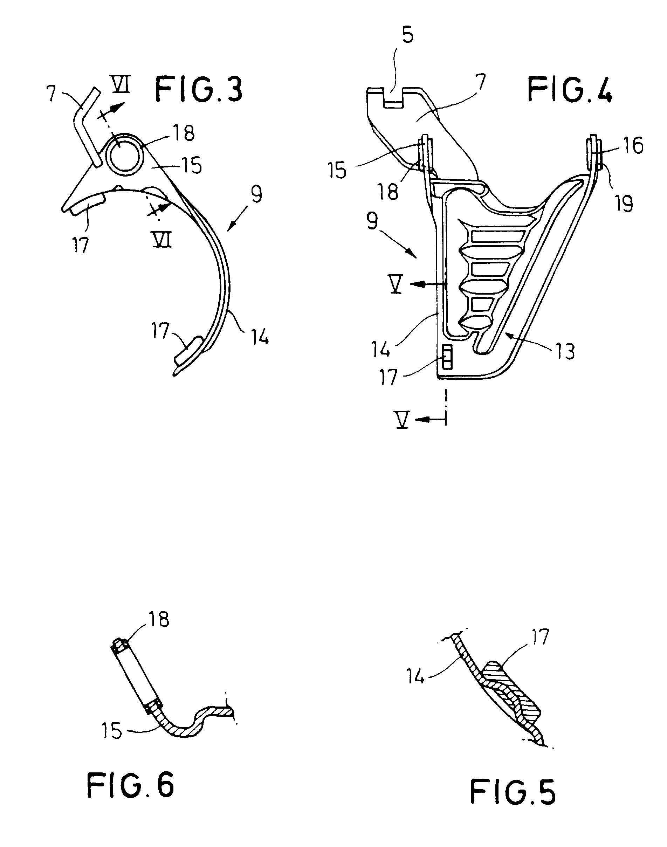

An der eigentlichen Schaltgabel 14 sind Gleitsteine 17 aus einem gleitförderndem Kunststoffmaterial durch Einspritzen oder Einklipsen befestigt. In ähnlicher Weise sind in den Führungsaugen 15 und 16 aus gleifförderndem Kunststoffmaterial bestehende Führungbüchsen 18 und 19 durch Einspritzen oder Einklipsen befestigt. Die Lage der entsprechenden Teile kann durch eine Zusammenschau der Fig. 3 bis 6 verdeutlicht werden.

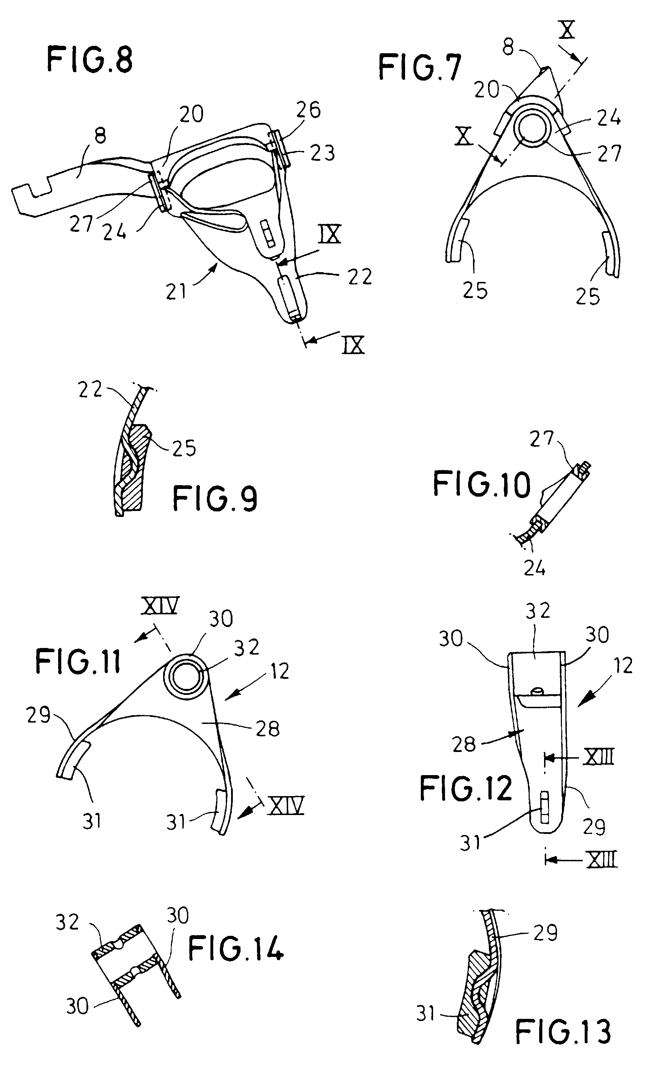

Die Schaltgabel 10 für den dritten und vierten Gang besteht aus dem aus einem dickeren Blechmaterial als Feinstanzteil ausgebildeten Schaltarm 8, der in diesem Falle mit einem verlängerten Teil 20 einen Teil des Grundkörpers der Schaltgabel 10 bildet, an dem der eigentliche Schaltgabelgrundkörper 21, der aus dünnerem Blechmaterial als Tiefziehteil gefertigt ist durch Schweißen befestigt ist. Der eigentliche Schaltgabelgrundkörper 21 bildet eine Schaltgabel 22 und Führungsaugen 23 und 24. An der Schaltgabel 22 ist ein Gleitstück 25 aus gleifförderndem Kunststoffmaterial eingespritzt oder eingeklipst und in ähnlicher Weise sind in den Führungsaugen 23 und 24 Führungshülsen 26 und 27 aus gleifförderndem Kunststoffmaterial eingespritzt oder eingeklipst. Ein besseres Verständnis der Form der Schaltgabel 10 für den dritten und vierten Gang ergibt sich aus der Zusammenschau der Fig. 8 bis 10.

Die Schaltgabel 12 für den fünften Gang ist auf der Schaltstange 11 fest angeordnet, weist jedoch wie aus den Fig. 11 bis 14 ersichtlich wird eine ähnliche Bauform wie die Schaltgabeln 9 und 10 auf, nur mit dem Unterschied, daß hier kein Schaltarm erforderlich ist, da diese Schaltgabel über die axial verschiebbare Schaltstange betätigbar ist.

Die Schaltgabel 12 besteht wieder aus einem aus dünnerem Blech als Tiefziehteil hergestellten eigentlichen Schaltgabelgrundkörper 28, der mit seiner einen Erstreckung eine eigentliche Schaltgabel 29 und mit seiner anderen Erstreckung Nabenaugen 30 bildet. An der Schaltgabel 29 sind wieder Gleitstücke 31 aus gleifförderndem Kunststoffmaterial eingespritzt oder durch einklipsen befestigt und an den Nabenaugen 30 ist in diesem Falle eine Metallhülse 32 durch Schweißen verbunden, die an der Schaltwelle 11 durch einen an sich bekannten Spannstift festgelegt werden kann.

Wie sich insbesondere aus Fig. 1 ergibt, ermöglicht die Ausbildung der eigentlichen Schaltgabeln als Tiefziehteile aus dünnem Blechmaterial ein übereinandergreifendes Ineinanderschachteln, insbesondere der Schaltgabeln 9 und 10 für den ersten und zweiten und den dritten und vierten Gang, wodurch bei beengten Platzverhältnissen durch weite Abstände der Führungsaugen für eine sichere und stabile Führung der Schaltgabeln bei gedrungener Bauweise gesorgt werden kann.

Zum Verbinden der verschiedenen Blechbauteile der erfindungsgemäßen Schaltgabeln können die verschiedensten bekannten Schweißverfahren wie z.B. Punkt-, Widerstands- und Laserschweißen herangezogen werden.

Die erfindungsgemäße Schaltgabel für Wechselgetriebe kann in besonders kostengünstiger Weise dadurch hergestellt werden, daß ihre Einzelteile weitestgehend durch spanlose Herstellungsverfahren sofort mit der erforderlichen Genauigkeit feingestanzt, feingeschnitten oder tiefgezogen werden, worauf dann die für entsprechende Führungsaufgaben erforderlichen Führungshülsen und Gleitstücke in der entsprechenden Fertiggenauigkeit durch Umspritzen der bereits durch Schweißen miteinander verbundenen Bauteile in einer entsprechenden Vorrichtung mit der gewünschten Endgenauigkeit fertig gestellt werden können.

Auf diese Weise können Schaltgabeln für Wechselgetriebe bei einem optimal geringen Gewicht und bei optimal verringerten Herstellungskosten mit der erforderlichen Robustheit und Genauigkeit hergestellt werden.

## Patentansprüche

1. Schaltgabel für Wechselgetriebe mit einem Schaltgabelgrundkörper aus einem Blechpreßteil, der einen Schaltarm und eine Schaltgabel bildet und an dem Kunststoffteile aus gleitförderndem Material verankert sind,
**dadurch gekennzeichnet,** daß
- der Schaltgabelgrundkörper (13 bzw. 21) als ein aus dünnerem Blechmaterial gefertigtes Tiefziehteil ausgebildet ist,
- ein getrennter Schaltarm (7 bzw. 8) als ein aus dickerem Blechmaterial gefertigtes Feinstanzteil ausgebildet ist und
- das Schaltarm-Feinstanzteil (7 bzw. 8) mit dem Schaltgabelgrundkörper-Tiefziehteil (13 bzw. 21) über geeignete Schweißverfahren, wie z.B. Punkt-, Widerstands- oder Laserschweißen verbunden ist.

2. Schaltgabel für Wechselgetriebe nach Patentanspruch 1,
**dadurch gekennzeichnet**, daß
- am Schaltgabelgrundkörper (13 bzw. 21) ausgebildete Schaltgabelführungsaugen (15/16 bzw. 23/24) mit Führungshülsen (18/19 bzw. 26/27) aus gleitförderndem Kunststoffmaterial versehen sind.

3. Schaltgabel für Wechselgetriebe nach Patentanspruch 1,
**dadurch gekennzeichnet**, daß
- am Schaltgabelgrundkörper (13 bzw. 21 und 28) Gleitstücke (17 bzw 25 und 31) aus gleitförderndem Kunststoff vorgesehen sind.

## Claims

1. A selector fork for a change-speed gear box, having a selector fork body consisting of a pressed sheet metal part, which forms a selector arm and a selector fork and to which there are anchored plastics components of slip-promoting material,
characterised in that
- the selector fork body (13 or 21) takes the form of a deep-drawn component of relatively thin sheet metal material,
- a separate selector arm (7 or 8) takes the form of a precision-blanked component made of relatively thick sheet metal material and
- the precision-blanked selector arm component (7 or 8) is connected with the deep-drawn selector fork body component (13 or 21) by suitable welding processes, such as for example spot welding, resistance welding or laser welding.

2. A selector fork for a change-speed gear box according to claim 1,
characterised in that
- selector fork guide lugs (15/16 or 23/24) formed on the selector fork body (13 or 21) are provided with guide sleeves (18/19 or 26/27) of slip-promoting plastics material.

3. A selector fork for a change-speed gear box according to claim 1,
characterised in that
- sliding blocks (17 or 25 and 31) of slip-promoting plastics are provided on the selector fork body (13 or 21 and 28).

## Revendications

1. Fourchette de sélection pour une boîte de vitesses, avec un corps de base de fourchette de sélection consistant en une pièce façonnée en tôle, qui forme un bras dit de sélection et la fourchette de sélection proprement dite, et sur laquelle sont ancrés des éléments en matériau plastique favorisant le coulissement,
**caractérisée** en ce que
- le corps de base (13 ou 21) de fourchette de sélection est réalisé sous forme de pièce emboutie fabriquée en tôle plus mince,
- un bras de sélection distinct (7 ou 8) est réalisé sous forme de pièce découpée de précision, fabriquée en tôle plus épaisse, et
- la pièce découpée de précision (7 ou 8) formant le bras de sélection est assemblée à la pièce emboutie (13 ou 21) formant le corps de base de fourchette de sélection par un procédé de soudage approprié, soudage par points, par résistance ou au laser par exemple.

2. Fourchette de sélection pour une boîte de vitesses selon la revendication 1, **caractérisée** en ce que des oeillets de guidage (15/16 ou 23/24) de fourchette de sélection, formés sur le corps de base (13 ou 21) de fourchette de sélection, sont pourvus de douilles de guidage (18/19 ou 26/27) en matériau plastique favorisant le coulissement.

3. Fourchette de sélection pour une boîte de vitesses selon la revendication 1, **caractérisée** en ce que des coussinets (17 ou 25 et 41) en matériau plastique favorisant le coulissement sont prévus sur le corps de base (13 ou 21 et 28) de fourchette de sélection.
